# EUROPEAN PATENT SPECIFICATION

(11) **EP 3 263 785 B1**
(45) Date of publication and mention of the grant of the patent: **25.01.2023**
(21) Application number: 17177400.3
(22) Date of filing: 22.06.2017
(51) Int. Cl.: E03D 9/00, E03D 9/03, B29C 45/14, E03D 9/02

(54) **METHOD OF FILLING A SANITIZING DEVICE, PARTICULARLY FOR SANITARY FIXTURES AND THE LIKE**
VERFAHREN ZUM BEFÜLLEN EINER DESINFEKTIONSVORRICHTUNG, INSBESONDERE FÜR SANITÄRARMATUREN UND DERGLEICHEN
PROCÉDÉ DE REMPLISSAGE D'UN DISPOSITIF DE DÉSINFECTION, EN PARTICULIER POUR APPAREILS SANITAIRES ET ANALOGUES

(30) Priority: 28.06.2016 IT UA20164706
(43) Date of publication of application: 03.01.2018
(73) Proprietor: Bolton Manitoba S.p.A., 20124 Milano (IT)
(72) Inventor: NOVITA', Luciano Mario, 20090 SEGRATE (IT); BAIGUERRA, Gianpaolo, 20020 ARESE MI (IT); BIANCHI, Raoul, 20811 CESANO MADERNO MI (IT); ALDERUCCIO, Gianni, 20832 DESIO MB (IT)
(74) Representative: Meroni, Francesca

(56) References cited:
- EP-A1- 2 133 477
- DE-A1- 19 855 304
- FR-A1- 2 258 320

## Description

The present invention relates to a method of filling a sanitizing device, particularly for sanitary fixtures and the like. More specifically, the invention relates to a method of filling a sanitizing device that is adapted to release a sanitizing product following the passage of water in contact with it or through it.

As is known, for sanitizing sanitary fixtures devices are used that comprise a form of cage inside which a sanitizing product in tablet form is arranged.

The device is clipped to the sanitary fixture so as to remain in contact with the internal wall of the sanitary fixture, in particular in a position that corresponds to a point where water passes.

When the water is flushed, the water flows over or passes through the containment device of the tablet and the tablet releases sanitizing product in order to sanitize the sanitary fixture.

Currently, sanitization devices comprise containers of the cage type that are adapted to accommodate a product in tablet form which is constituted by a sanitizing product with gradual release. Such tablet is typically constituted by a solid material, accommodated in the cage, which dissolves upon the passage of water in contact with it.

Such tablets, however, have several problems.

Firstly the tablets have an unpleasant appearance, being opaque, and their outward appearance worsens as they are consumed.

Furthermore the tablets are made using inert substances such as sodium carbonate, sodium sulfate, sodium chloride, calcium carbonate etc, in order to confer a solid texture. The purpose of such inert substances are not linked to the performance of the product; they are only needed for the latter to have a solid texture. However, against this, some inert substances used tend to leak and therefore to leave undesired streaks on the inner surface of the sanitary fixture.

Furthermore, given the solid and rich nature of the inorganic substances in the tablet, the latter is very dense, with the drawback that in order to have a tablet of sufficient volume it is necessary to use a relatively high amount by weight of the product, with consequent high costs.

Even further, the presence of inert substances and anionic surfactants is not a factor that favors the yield of the scent during use of the tablet, and the scent is one of the most important features in order to attract the consumer.

An alternative solution known in the background art for sanitizing sanitary fixtures relates to the use of gels, i.e. of adhesive substances in semisolid form, which are applied directly on the inner surface of the sanitary fixture. These solutions too, however, are not devoid of drawbacks. In particular, the application of gel directly on the wall of the sanitary fixture entails the need to come into contact with that wall, a situation that is often unwanted for the user, irrespective of the conditions of cleanliness of the sanitary fixture. Furthermore, the application of a dose of gel on the wall is a much more complex operation than clipping to that sanitary fixture, since entails exerting sufficient pressure, so as to make the dose of gel adhere to the wall, and a certain degree of dexterity in manipulating the device for applying the gel, whether it is in the form of a syringe (single dose or multidose) or in the form of a blister.

Finally, liquid tablets are known the content of which is therefore aqueous and free from inert substances. Such tablets contain liquids that are often viscous but, however, they exhibit the drawback of needing to be handled like a liquid and therefore the container that holds them must be perfectly closed, and in order to obtain the desired sanitizing effect it is necessary to provide complex and expensive mechanisms to allow the gradual release of the liquid in use.

Documents FR2258320, DE19855304,EP2133477 describes other sanitizing devices.

However, no sanitizing devices are currently available that comprise a container body of the cage type with openings adapted to directly collect the water and to directly release the product flushed by that water, and which accommodates a sanitizing product in gel form. This is due to the fact that the product in gel form is very difficult to load into the container body, since, upon its insertion into the container body, which is conveniently provided with slits for the gradual release of the product, the gel tends immediately to leak out of the container body itself, thus making it substantially impossible to load the container body with the product in gel form.

The aim of the present invention is to provide a method of filling a sanitizing device with a product in gel form, that overcomes the problems mentioned above with reference to the background art.

Within this aim, an object of the present invention is to provide a method of filling a sanitizing device for sanitary fixtures, in which the device has all the advantages of the gel but without requiring the user to come directly into contact with the internal wall of a sanitary fixture.

Another object of the present invention is to provide a method of filling a sanitizing device for sanitary fixtures that is highly reliable, easily and practically implemented and low cost.

This aim and these and other objects which will become better apparent hereinafter are achieved by a method of filling a sanitizing device according to claim 1 and by the sanitizing device according to claim 4.

Further embodiments of the invention are covered by the dependent claims 2, 3 and 5; characteristics and advantages of the invention will become better apparent from the description of preferred, but not exclusive, embodiments of the sanitizing device according to the present invention, which are illustrated by way of non-limiting example in the accompanying drawings, wherein:
Figure 1 is a perspective view of a first embodiment of the device not comprised within the scope of the claims;
Figure 2 is a side view of the device of Figure 1;
Figure 3 is an additional perspective view of the device of Figures 1 and 2;
Figure 4 is a rear view of the device of Figures 1-3;
Figure 5 is a front view of the device of Figures 1-4;
Figure 6 is a perspective view of a second embodiment of the device not comprised within the scope of the claims;
Figure 7 is a side view of the device of Figure 6;
Figure 8 is an additional perspective view of the device of Figures 6 and 7;
Figure 9 is a rear view of the device of Figures 6-8;
Figure 10 is a front view of the device of Figure 6-9;

With reference to the figures, the sanitizing device according to the invention, generally designated by the reference numeral 1, comprises a container body 2 that is adapted to define a form of cage for a sanitizing product, and a supporting stem 3, which is connected to the container body 2 and is adapted to be clipped to the edge of a sanitary fixture. The general term "sanitizing device" is used to indicate a sanitizing and/or scenting and/or cleaning device.

The supporting stem 3 can be provided at an angle with respect to the front surface of the container body 2, as shown in the figures, or it can be aligned with the front surface of the container body 2.

Conveniently, the container body 2 is adapted to contain a sanitizing product in gel form 4.

Conveniently, the container body 2 is provided with a plurality of slits 5 that are adapted to allow the release of the sanitizing product 4 in gel form, with the slits being advantageously arranged at the bottom surface of the container body 2, i.e. the surface that is adapted to be directed toward the wall of the sanitary fixture to which the sanitizing device is applied.

The method described in the present application allows great freedom in the choice of the dimensions, shape and positions of the slits of the cage adapted to receive the water used to flush the toilet bowl. It is possible, with this method, to make for example a cage that contains numerous slits of width 4-7 mm. Such slits do not constitute a problem in the step of filling with the gel, since in such step they will conveniently be covered by a layer of water-soluble material.

At the same time, the product will exhibit excellent performance in use precisely by virtue of the very wide slits which will allow the solubilization of a considerable quantity of product at each flush with positive effects in terms of foaming, cleaning, scenting, and sanitization.

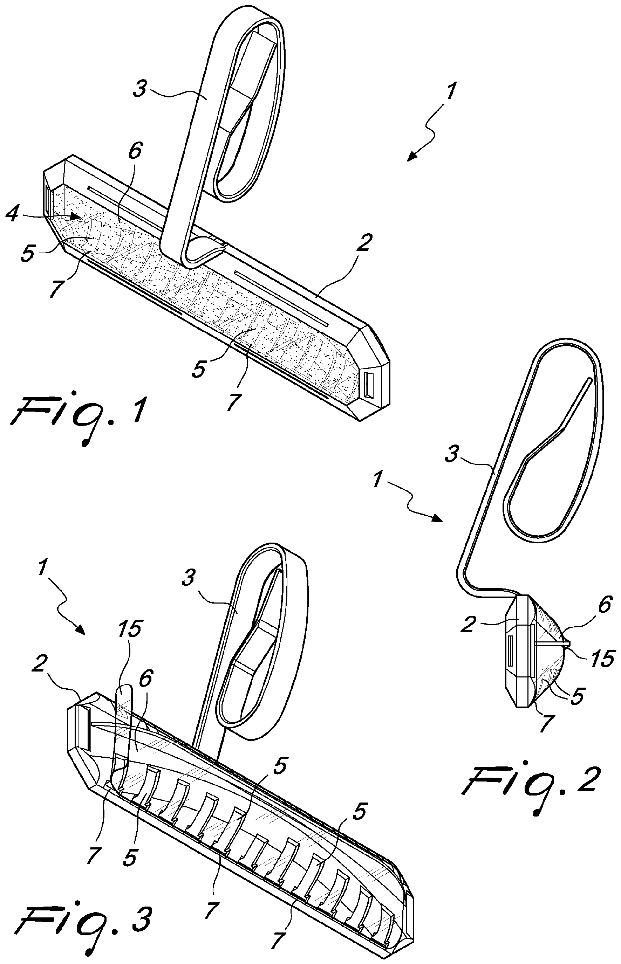

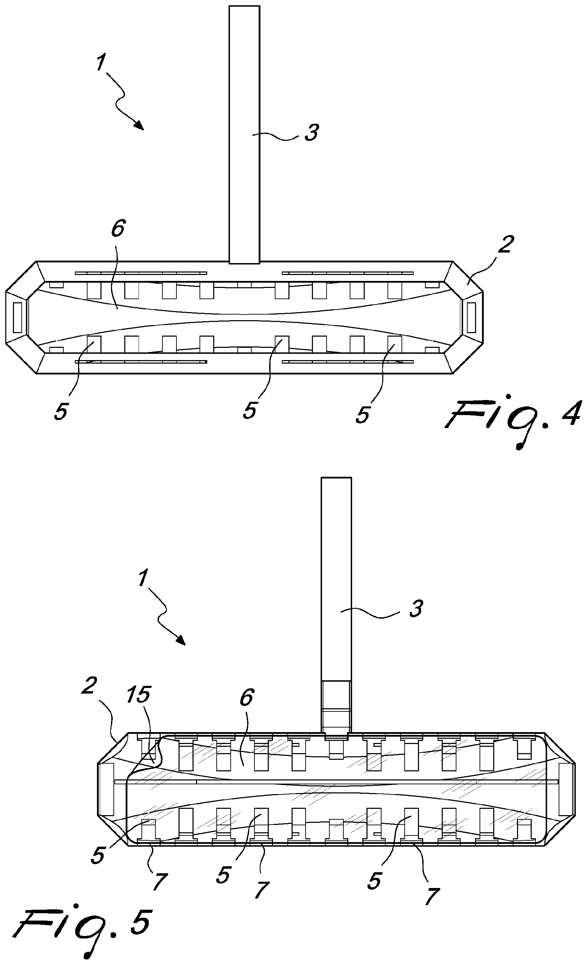

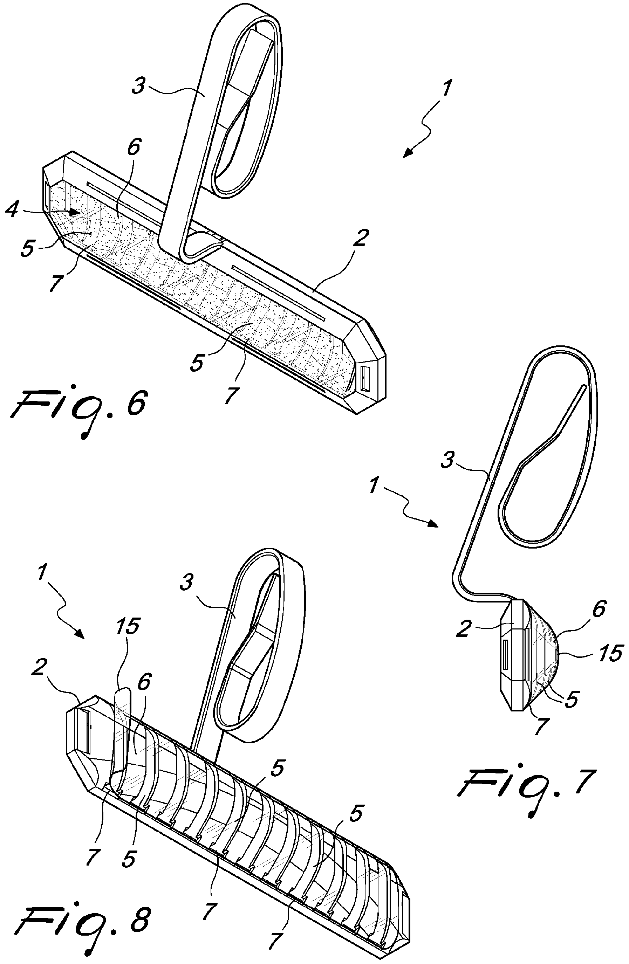

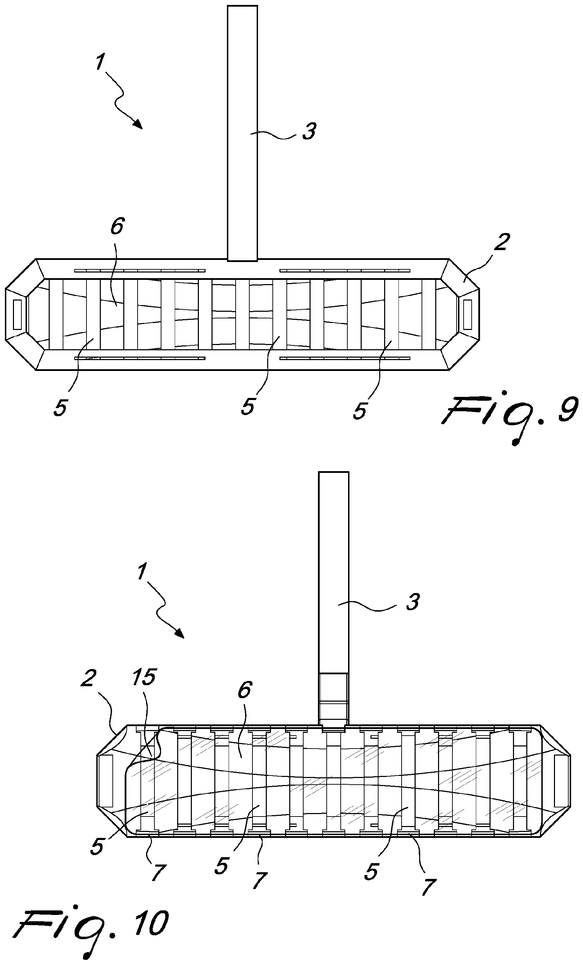

Advantageously, it is possible to provide, at the bottom surface of the container body 2, slits 5 that can, indifferently, be interrupted, as shown in Figures 1-5, or continuous at the bottom of the container body 2, as shown in Figures 6-10.

An additional variation of the slits 5 provided at the bottom of the container body 2 entails that the slits widen as they extend upward with respect to the direction of pouring of the product in gel form, for example in a region 7, arranged preferably perpendicular to the extension of the slits, as shown in the figures.

Such widening may optionally also not be present.

The method of filling according to the invention entails covering the slots of the container body with a water-soluble substance, such that the product in gel form can be poured into the container body without the product exiting through the slits.

During use of the sanitizing device, at the first streams the water dissolves the water-soluble material in order to ensure that the mass of gel can be exposed to the flow of water and hence be washed away into the sanitary fixture.

The water-soluble substance used can be chosen from many alternatives. The preferred embodiment entails the use in particular of PVA (polyvinyl alcohol). The thickness and the molecular weight of the PVA used can influence the speed of dissolving under the streams of water of the toilet bowl and therefore the flush time or the number of flushes necessary for the water to begin to solubilize the cleaning and scenting composition once the water-soluble film has been solubilized.

It is preferable to use PVA films that are not too thick, for example with thicknesses less than or equal to 40 microns or in any case such as to allow dissolving in few flushes.

In any case there are many alternatives to PVA, polymeric materials such as for example polyvinylpyrrolidone, polyalkylene oxides, polyacrylates, polyacrylamides, polyamides, acrylic/maleic copolymers, polysaccharides, gelatine, cellulose derivatives in general such as for example hydroxyethyl-, methyl- and propyl-cellulose, maltodextrins, etc.

In a first embodiment, not comprised within the scope of the claims, a water-soluble film (in particular PVA, with different thicknesses according to requirements) is placed inside the container body, and then the product in gel form is poured into the container body thus protected by the water-soluble film.

A second embodiment, also not comprised within the scope of the claims, entails covering the slots of the container body with water-soluble material, by inserting the water-soluble polymer directly during the step of injection molding, or molding by coextrusion, or with a method similar to that used in mold labeling processes, which entails depositing a water-soluble film of suitable shape and size inside the mold before introducing the polymer with which the actual container body is made.

The result is a container body with slots covered by water-soluble material.

An embodiment according to the present invention entails treating the container body with a concentrated solution of water-soluble material and subsequently subjecting it to a step of drying. The result is a layer of water-soluble film on the container body, into which the gel can then be poured.

Using a water-soluble film to cover the slots of the container body makes it possible to provide the slots in any size, since the aforementioned film prevents the gel from pouring through the slots at the moment when it is filled into the container body.

During filling by way of pouring, a part of the water-soluble material can be partially absorbed by the hot and aqueous composition. It has been found however that such phenomenon does not compromise the effectiveness of the filling or the containment of the hot gel by the container body.

In practice it has been found that the sanitizing device according to the present invention and the corresponding filling method achieve the intended aim and objects.

In fact, the device according to the invention makes it possible to be loaded with a tablet made with a product in gel form, with the product in gel form being loaded in the container body of the sanitizing device without the product in gel form exiting from the slits for releasing the product during loading.

The use of gel inside a device of the type shown makes it possible to overcome the problems of the background art with regard to the use of solid sanitizing tablets, and the problems associated with the use of liquid tablets that require a completely closed container, and also the problems associated with the use of gel applied directly on a wall of the sanitary fixture.

In fact, the characteristics of the gel make it possible to provide containment devices that are open or partially open, for example with numerous openings in the upper and lower part of the cage (with respect to the flow of the water), and to take advantage of the rheological characteristics of the gel that enable its stable permanence inside a perforated container, even under the effect of streams of water. In the same way, the convenience remains unaltered of application to the sanitary fixture of a device of the cage type, which does not require particular dexterity or the need to come into contact with the internal wall of the sanitary fixture in order to directly apply a dose of gel.

The method, thus conceived, is susceptible of numerous modifications and variations, all of which are within the scope of the appended claims.

Moreover, all the details may be substituted by other, technically equivalent elements.

In particular, the person skilled in the art will understand without effort that the shape of the container body, as well as the dimensions and the shapes of the slits, can be many according to the method of filling adopted and depending on the composition of the gel.

In practice, the materials used, as well as the contingent shapes and dimensions, may be any according to the requirements and the state of the art.

The present application claims priority from the Italian Patent Application No. 102016000066778 (UA2016A004706).

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method of filling a sanitizing device (1), comprising the steps of:
- preparing a container body (2) adapted to contain a sanitizing product in gel form (4), said container body (2) being affected by slits (5) adapted to allow the gradual release of said sanitizing product in gel form (4);
- depositing a water-soluble material (15) inside said container body, so as to cover said slits (5);
- pouring said sanitizing product in gel form (4) into said container body (2), **characterized in that** said step of depositing said water-soluble material (15) inside said container body (2) comprises treating said container body (2) with a concentrated solution of said water-soluble material (15) and subsequently drying it.

2. The method according to claim 1, **characterized in that** said solid water-soluble material (15) is PVA.

3. The method according to one or more of the preceding claims, **characterized in that** said step of depositing said water-soluble material (15) inside said container body (2), treating said container body (2) with a concentrated solution of said water-soluble material (15) and subsequently drying it, results in a layer of a water-soluble film (15) inside said container body.

4. A sanitizing device, particularly for sanitary fixtures and the like, which comprises a container body (2) containing a sanitizing product in gel form (4), said container body (2) being affected by slits (5) that are adapted to allow the gradual release of said sanitizing product, said slits (5) being covered by a water-soluble material (15) in order to make it possible to pour the sanitizing product in gel form (4) into said container body (2) without said sanitizing product (4) exiting from said slits (5) upon the pouring of said sanitizing product (4) in gel form, **characterized in that** said water-soluble material (15) is a dried concentrated solution of water soluble material.

5. The device according to claim 4, **characterized in that** said water-soluble material (15) is PVA.

## Patentansprüche

1. Verfahren zum Befüllen einer Desinfektionsvorrichtung (1), umfassend die folgenden Schritte:
- Vorbereiten eines Behälterkörpers (2), welcher dazu eingerichtet ist, ein Desinfektionsmittel in Gelform (4) zu enthalten, wobei der Behälterkörper (2) durch Schlitze (5) geprägt ist, welche dazu eingerichtet sind, die allmähliche Freigabe des Desinfektionsmittels in Gelform (4) zu erlauben;
- Abscheiden eines wasserlöslichen Materials (15) innerhalb des Behälterkörpers, um die Schlitze (5) zu bedecken;
- Gießen des Desinfektionsmittels in Gelform (4) in den Behälterkörper (2),
**dadurch gekennzeichnet, dass** der Schritt des Abscheidens des wasserlöslichen Materials (15) innerhalb des Behälterkörpers (2) ein Behandeln des Behälterkörpers (2) mit einer konzentrierten Lösung des wasserlöslichen Materials (15) und ein anschließendes Trocknen desselben umfasst.

2. Verfahren nach Anspruch 1, **dadurch gekennzeichnet, dass** das feste wasserlösliche Material (15) PVA ist.

3. Verfahren nach einem oder mehreren der vorhergehenden Ansprüche, **dadurch gekennzeichnet, dass** der Schritt des Abscheidens des wasserlöslichen Materials (15) innerhalb des Behälterkörpers (2), des Behandelns des Behälterkörpers (2) mit einer konzentrierten Lösung des wasserlöslichen Materials (15) und des anschließenden Trocknen desselben in einer Schicht aus einem wasserlöslichen Film (15) innerhalb des Behälterkörpers resultiert.

4. Desinfektionsvorrichtung, insbesondere für sanitäre Halterungen und dergleichen, welche einen Behälterkörper (2) umfasst, welcher ein Desinfektionsmittel in Gelform (4) enthält, wobei der Behälterkörper (2) durch Schlitze (5) geprägt ist, welche dazu eingerichtet sind, die allmähliche Freigabe des Desinfektionsmittels zu erlauben, wobei die Schlitze (5) durch ein wasserlösliches Material (15) bedeckt sind, um es möglich zu machen, das Desinfektionsmittel in Gelform (4) in den Behälterkörper (2) zu gießen, ohne dass das Desinfektionsmittel (4) auf das Gießen des Desinfektionsmittels (4) in Gelform hin aus den Schlitzen (5) austritt,
**dadurch gekennzeichnet, dass** das wasserlösliche Material (15) eine getrocknete konzentrierte Lösung eines wasserlöslichen Materials ist.

5. Vorrichtung nach Anspruch 4, **dadurch gekennzeichnet, dass** das wasserlösliche Material (15) PVA ist.

## Revendications

1. Procédé de remplissage d'un dispositif de désinfection (1), comprenant les étapes de :
- préparation d'un corps de contenant (2) adapté pour contenir un produit de désinfection sous forme de gel (4), ledit corps de contenant (2) étant équipé de fentes (5) adaptées pour permettre la libération progressive dudit produit de désinfection sous forme de gel (4) ;
- dépôt d'un matériau soluble dans l'eau (15) à l'intérieur dudit corps de contenant, de manière à recouvrir lesdites fentes (5) ;
- versage dudit produit de désinfection sous forme de gel (4) dans ledit corps de contenant (2), **caractérisé en ce que** ladite étape de dépôt dudit matériau soluble dans l'eau (15) à l'intérieur dudit corps de contenant (2) comprend le traitement dudit corps de contenant (2) avec une solution concentrée dudit matériau soluble dans l'eau (15) suivi du séchage de celui-ci.

2. Procédé selon la revendication 1, **caractérisé en ce que** ledit matériau solide soluble dans l'eau (15) est du PVA.

3. Procédé selon une ou plusieurs des revendications précédentes, **caractérisé en ce que** ladite étape de dépôt dudit matériau soluble dans l'eau (15) à l'intérieur dudit corps de contenant (2), de traitement dudit corps de contenant (2) avec une solution concentrée dudit matériau soluble dans l'eau (15) suivi du séchage de celui-ci, résulte dans une couche d'un film soluble dans l'eau (15) à l'intérieur dudit corps de contenant.

4. Dispositif de désinfection, en particulier pour appareils sanitaires et analogues, qui comprend un corps de contenant (2) contenant un produit de désinfection sous forme de gel (4), ledit corps de contenant (2) étant équipé de fentes (5) qui sont adaptées pour permettre la libération progressive dudit produit de désinfection, lesdites fentes (5) étant recouvertes par un matériau soluble dans l'eau (15) afin de permettre de verser le produit de désinfection sous forme de gel (4) dans ledit corps de contenant (2) sans que ledit produit de désinfection (4) ne sorte par lesdites fentes (5) lors du versage dudit produit de désinfection (4) sous forme de gel, **caractérisé en ce que** ledit matériau soluble dans l'eau (15) est une solution concentrée séchée de matériau soluble dans l'eau.

5. Dispositif selon la revendication 4, **caractérisé en ce que** ledit matériau soluble dans l'eau (15) est du PVA.
